Europäisches Patentamt

European Patent Office

Office européen des brevets

(19)

(11) Publication number: **0 001 607**
**A2**

(12) **EUROPEAN PATENT APPLICATION**

(21) Application number: **78101103.6**

(22) Date of filing: **09.10.78**

(51) Int. Cl.²: **B 64 C 25/56**

(30) Priority: **26.10.77 US 845701**

(43) Date of publication of application:
**02.05.79 Bulletin 79/9**

(84) Designated contracting states:
**DE FR GB NL**

(71) Applicant: **The B.F. GOODRICH Company
Dept. 0015 WHB-6 500 South Main Street
Akron, Ohio 44318(US)**

(72) Inventor: **Fischer, John Melvin
622 Sackett Avenue
Cuyahoga Falls Ohio 44221(US)**

(74) Representative: **Baillie, Iain Cameron et al,
c/o Ladas, Parry, von Gehr. Goldsmith & Deschamps
Blumenstrasse 48
D-8000 München 2(DE)**

(54) Emergency float assembly for helicopters and the like.

(57) An emergency flotation assembly for a helicopter comprises inflatable tubular float members attached to the helicopter skids which when inflated operate to keep the craft afloat while on the surface of a body of water. Each float is attached to the craft by a fabric flange or flanges extending from the float surface and secured to each horizontally disposed skid structure. Each float is further stabilized by connecting other surface portions of the float, peripherally spaced from the location of the fabric flanges, to a sleeve which is slidably mounted on each of the struts of the craft extending between the skids and the body of the craft.

FIG.1

EP 0 001 607 A2

0001607

# EMERGENCY FLOAT ASSEMBLY
## FOR HELICOPTERS AND THE LIKE.
### BACKGROUND OF THE INVENTION

The invention relates to emergency gear for aircraft such as helicopters and particularly to emergency flotation assemblies which comprise inflatable members.

Aircraft, such as helicopters, are occasionally required to descend upon the surface of a body of water. To keep the crafts afloat in such situations, the helicopter is often provided with inflatable emergency floats attached to the craft adjacent to or usually directly upon its landing skid members.

The floats are usually elongated inflatable tubular members attached to the upper surface of the skids to coextend with the skid along substantially its full horizontal length. These tubular members, in their uninflated state, are packed within cover members extending over the upper surface of the skids, which cover members are adapted to release upon initiation of inflation of the tubular floats controlled by the operator of the craft.

It is important that these tubular members be attached to the craft in a manner to assure that, when inflated, the tubular members maintain a substantially stable and fixed relationship to the craft and are not greatly affected by wind or other forces which could move them about to undesirable and/or ineffective positions.

### SUMMARY

It is an object of the present invention to provide an inflatable flotation assembly for helicopters which has improved stability and effectiveness when in an inflated condition.

It is another object of the present invention to provide an improved emergency flotation assembly for helicopters which comprises inflatable tubular floats secured to the helicopter in a manner which stabilizes the floats, when inflated, against undesirable movement relative to the craft caused by wind currents or other external forces.

These and other objects evident from this entire specification are achieved by a flotation assembly for a helicopter which comprises an inflatable, tubular float member securable to each skid member of the helicopter and means to stabilize each member relative to the helicopter when inflated. The float members are each securable to a skid member by a flange integral with and extending from the surface of the float member. Additional securement and stabilizing means are provided which comprises one or more sleeves adapted for movement upon one or more of the struts extending from the skids to the body of the helicopter which sleeve is secured to another surface portion of the float member peripherally spaced from the fabric flange. Upon inflation, expansion of the tubular flotation member causes the sleeve to slide upwardly along the strut to a position where it holds an upper portion of the member stabilized relative to the skid and strut assembly.

## THE DRAWINGS

In the accompanying sheet of drawing, the present invention is shown in accordance with a presently preferred embodiment wherein:

Fig. 1 is a side view of the left lower portion of an aircraft, such as a helicopter, showing one of the landing gear skid and strut assemblies equipped with an uninflated flotation assembly;

Fig. 2 is a view similar to Fig. 1 wherein the flotation assembly is inflated;

Fig. 3 is an enlarged view of a portion of a strut and skid assembly showing an uninflated flotation assembly mounted thereon, with portions of the view being omitted and/or broken away;

Fig. 4 is an enlarged view similar to the view of Fig. 3 wherein the flotation assembly is shown inflated.

## DETAILED DESCRIPTION

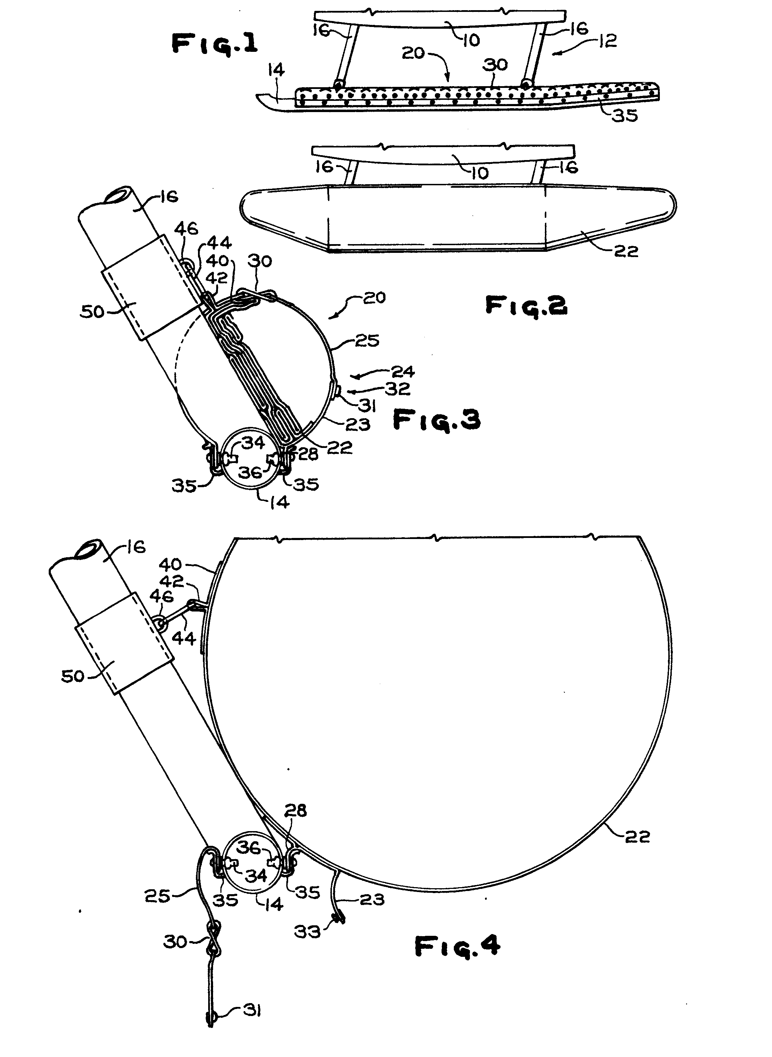

In Figs. 1 and 2, the lower fuselage of a helicopter is generally referenced 10 and the landing gear of the helicopter is generally referenced 12, it being understood that, for purposes of this description, only the left hand portion of the craft is shown in the drawings. The landing gear such as 12 in Figs. 1 and 2 may typically comprise four strut members, such as 16, extending from the lower fuselage 10, a left hand pair of struts extending for connection to a left hand skid member 14 as shown in the drawing, and a right hand pair of struts extending to a right hand skid (not shown).

Each skid, such as 14, extends below and essentially longitudinally of the aircraft and is the part of the craft which first contacts the ground during landing. Mounted along the upper surface of each of the skids is a flotation assembly, such as 20, for use when the craft is to be landed on water.

Each flotation assembly 20 comprises an inflatable tubular member or float 22, which when not inflated, is folded (see Fig. 3) into a packed condition suitable for storage within a fabric cover 24.

Cover 24 comprises two longitudinally extending fabric sections 23 and 25 joined by a series of longitudinally placed snaps 32. As seen in Figs. 3 and 4, fabric section 25 is wider than fabric section 23 and is fitted with longitudinally spaced snap caps or tops 31, while fabric section 23 is fitted with longitudinally spaced snap bases 33. The lower margin of fabric section 23 is provided with a plurality of longitudinally spaced openings in order to receive a plurality of rivet-like fasteners 36 for securing cover 24 to the outboard side of each skid 14. Likewise, the lower margin of fabric piece 25 is provided with similar openings to secure cover 24 to the inboard side of strut 4 by a plurality of fasteners 34, one of which is shown in Figs. 3 and 4. Along the top of cover 24 a longitudinal portion of fabric section 25 is split and adapted to receive a lacing 30. When packing float 22 in cover 24, this lacing is used to tightly pack down float 22, after the float has been placed within cover 24 and fabric pieces 23 and 25 snapped together. Longitudinally extending Z-shaped plates 35 are provided along the inboard and outboard sides of skid 14 to receive each of the pluralities of fasteners 34 and 36, which plates function to clamp the cover margins against the skid and also to protect the cover against abrasion by gravel, dirt, etc.

When fabricating float 22, two longitudinally spaced sections of fabric such as 40 (see Figs. 3 and 4) are made to adhere to two areas of the outer surface of float 22, which will position adjacent struts 16 when the float 22 is inflated. The fabric sections 40 are provided with an integral looped portion 42 extending outwardly of the surface of float 22. A link member 44 is made to pass through each loop 42 which link member is jointed to a ring-like projection 46 which extends from a tubular sleeve 50.

Each tubular sleeve 50 is sized to encircle and slide upon each strut member 16. When the flotation assembly is in a packed condition as represented in Fig. 3, sleeve 50 is disposed on a lower portion of strut 16. When the assembly is inflated, sleeves 50 slide upwardly along struts 60 and position at upper portions of each strut as represented in Fig. 4, thus stabilizing inflated float 22 relative to its associated struts 16.

The lower portion of each float 22 is stabilized against each skid 14 by means of a longitudinally extending fabric flange 28 which is made to extend outwardly from the surface of longitudinally extending cover section 23. As seen in Fig. 4, a portion of cover section 23 is made to adhere to the surface of float 22, while another portion carrying snap base 33 is free of float 22. As further seen in Fig. 4, laced cover section 25 is not adhered to float 22 but is free to hang from skid 14 when the float is inflated. Fabric flange 28 contains prepunched holes spaced to receive the pluralities of rivet-like members 35 on the outboard side of skid 14 and is thus disposed between skid 14 and the outboard Z-plate 35 thereby stabilizing float 22 against the landing gear.

In operation, inflation of the flotation assemblies on each skid is typically controlled by the operator of the aircraft. Usually each assembly package such as 20 is provided with an inflation container (not shown) provided with a valve which actuates by operator control to inflate each float member. As inflation proceeds, the snaps 32 on the cover will release due to pressure by the inflating float, freeing the cover member 24 allowing each float to develop full inflated size such as depicted in Fig. 4. As each float 22 is inflating, each sleeve member 50 slides upwardly along each of the skids reaching an uppermost stabilizing position depicted in Fig. 4.

Each of the various components of the assembly described herein as "fabric" are typically rubberized fabric such as for example neoprene impregnated nylon. The fabric comprising the float 22 should of course be air impermeable and for simplicity of manufacturing, the cover 24, various sections 40, and stabilizing flange 28 may be of the same material as float 22.

Various modifications to and departures from are possible to the specific embodiment of the invention as described herein with such modifications and departures considered to be within the scope of the present invention as recited in the following claims.

## CLAIMS

1. An emergency flotation system for attachment to a skid and supporting strut assembly of a helicopter said system comprising

(A) an inflatable, tubular, elongated float member having

1) a first means on the outer surface of said member for securing said member to said skid and

2) a second means on the member surface spaced from said first means for connecting said member to said strut assembly and

(B) float member mounting and stabilizing means comprising

1) means for securing the first means to the skid and

2) means movable along said strut assembly for connecting said second means to said strut.

2. The device defined in claim 1 wherein said first means comprises at least one fabric loop extending from the surface of said float member.

3. The device defined in claim 1 wherein said second means comprises at least one fabric loop extending from the surface of said float member.

4. The device defined in claim 1 wherein the means movable along the strut comprise a sleeve member adapted to fit around said strut for movement along the length of said strut.

5. The device defined in claim 4 wherein said first means comprises at least one flange of fabric material extending from the surface of the float member.

6. The device defined in claim 4 wherein said second means comprises at least one fabric loop extending from the surface of said float member.

7. The device defined in claim 6 wherein said first means comprises at least one flange of fabric material extending from the surface of the float member.

0001607 1/1

FIG.1

FIG.2

FIG.3

FIG.4